# EUROPÄISCHE PATENTSCHRIFT

(11) **EP 2 216 221 B1**
(45) Veröffentlichungstag und Bekanntmachung des Hinweises auf die Patenterteilung: **04.01.2012**
(21) Anmeldenummer: 08843518.5
(22) Anmeldetag: 15.07.2008
(51) Int. Cl.: B60W 10/10, F16H 59/06, H02P 5/00, F16H 59/18, F16H 59/54, F16H 59/36, H02P 23/00, G01D 5/20, G01L 3/10, H02K 51/00

(54) **NUMERISCH GESTEUERTER UND STUFENLOSER HYBRIDVARIATOR**
ELECTROMECHANICAL STEP-LESS HYBRID NUMERICALLY CONTROLLED VARIATOR
VARIATEUR HYBRIDE À VARIATION CONTINUE À COMMANDE NUMÉRIQUE POUR MACHINES ÉLECTRIQUES

(30) Priorität: 30.10.2007 RU 2007139846
(43) Veröffentlichungstag der Anmeldung: 11.08.2010
(73) Patentinhaber: Drujkov, Vladimir Vladimirovich, Magadan 685030 (RU)
(72) Erfinder: Drujkov, Vladimir Vladimirovich, Magadan 685030 (RU)
(74) Vertreter: Jeck, Anton
(86) Internationale Anmeldenummer: PCT/RU2008/000465
(87) Internationale Veröffentlichungsnummer: WO 2009/058048

(56) Entgegenhaltungen:
- EP-A2- 1 582 845
- DE-A1- 19 539 571
- FR-A1- 2 855 677
- JP-A- 1 305 334
- RU-C2- 2 264 307
- SU-A1- 1 234 929
- US-A- 3 604 288
- US-A1- 2003 184 170
- US-A1- 2005 085 975
- US-A1- 2007 030 134
- US-B1- 6 373 160
- US-B1- 6 762 523

## Beschreibung

Die Erfindung betrifft ein stufenloses hybrides Maschinenregelgetriebe mit Digitalsteuerung, welches einen Gangschalthebel und eine Kupplungswelle enthält, die mit einer Motorwelle verbunden ist; wobei die Motorwelle und ein Generator auf einem Rahmen befestigt sind und wobei der Generator durch den Motor über einen Riementrieb antreibbar ist

Die Erfindung kann im Maschinenbau, insbesondere bei Verfahren zur Drehzahlregelung von Wellen von Stellwerken eingesetzt werden. Die Erfindung kann z. B. in der Kraftfahrzeugkonstruktion anstelle eines konventionellen Stufengetriebes angewendet werden.

Aus dem Stand der Technik ist ein stufenloses Planetargetriebe bekannt (Patent der RF Nr. 22095665). Die Konstruktion des Getriebes umfasst drei Reibzeuge. Diese Baugruppen sind besonders verschleißanfällig. Zudem gibt es keine Leergangstellung. Gemäß der Beschreibung wird ein großes Zentralrad mit einer Abtriebswelle beim Erststart einer Wärmekraftmaschine durch eine Bremse abgebremst. Folglich wirkt eines der Reibzeuge dem beachtlichen Drehmoment entgegen, welches für die Anfangsbewegung des Fahrzeuges verwendet wird und ausreichend ist.

Die Energie der Wärmekraftmaschine wird teilweise durch einen Generator aufgenommen. Dabei wird die höchste Menge der Energie beim Direktgang aufgenommen, das heißt zu dem Zeitpunkt, wo die Wärmekraftmaschine nach einer Beschleunigung an sparsamsten im Dauerbetrieb laufen muss. Das stufenlose regelbare Getriebe hat eine geringere Schnellwirkung. Beim Einschwingverhalten und bei Änderungen der Übersetzungsverhältnisse wirkt sich die Trägheit der Bauteile aus. Das folgt aus der Beschreibung: "...Und umgekehrt, beim Heraufschalten muss anhand eines Griffes der Regelwiderstand reduziert, und die Motordrehzahl gesteigert werden, indem ein Fußgashebel betätigt wird. Dabei ist eine gewisse "Einsenkung" in der Geschwindigkeitszunahmedynamik möglich, denn ein Teil des hochtreibenden Drehmoments des Motors wird für das Anfahren eines Schwungradläufers aufgewendet." Darüber hinaus wird in der Beschreibung erwähnt, dass für die Umschaltung des regelbaren Getriebes der Regelwiderstand geändert werden muss. Dies führt allerdings zu zusätzlichen Schwierigkeiten im Zusammenhang mit der Anpassung der Zusammenwirkung des Fußgashebels und der Regelwiderstandssteuerung. Ein weiterer Mangel besteht auch darin, dass die Umkehr nur bei einem festen Übersetzungsverhältnis erfolgen kann.

Um den Wirkungsgrad eines stufenlosen Getriebes zu erhöhen, wird beabsichtigt, die Vorrichtung mit einer zusätzlichen Kupplung zu ergänzen. Diese Kupplung sollte nur beim Direktgang funktionieren. Folglich würde sie die Funktion des stufenlosen Getriebes bei dem dem Direktgang nächstliegenden Übersetzungsverhältnissen infolge einer ständigen Auslösung der Kupplung erschweren. Außerdem wird dadurch eine Schnellwirkung des stufenlosen regelbaren Getriebes abgebaut.

Aus dem Stand der Technik ist ein selbstregelndes holonomes stufenloses Getriebe (Patent der RF Nr. 22044196) bekannt. Das stufenlose selbstregelnde Getriebe dient zur automatischen stufenlosen Drehzahländerung der Abtriebswelle je nach ihrer Belastung bei konstanter Drehzahl des Antriebsmotors. Gemäß der beabsichtigten Erfindung dagegen sollen sich die Übersetzungszahlen des Getriebes beim Lastwechsel sowie bei Änderungen der Drehzahlen des Antriebsmotors und der Sekundärwelle stufenlos ändern.

Der Mangel dieses selbstregelnden Getriebes besteht darin, dass die Überschussleistung (bis zu 25 % der Leistung) beim Betrieb des Getriebes durch einen Generator aufgenommen wird. Dadurch wird das Übersetzungsverhältnis geändert. Dabei erfolgt die höchste Aufnahme bei hohen Übersetzungszahlen des stufenlosen regelbaren Getriebes, d. h., während der Beschleunigung, wenn ein erhöhtes Drehmoment erforderlich ist.

Der weitere Mangel besteht auch darin, dass die Konstruktion des Getriebes zahlreiche Zahnräder und eine Maschine einschließt.

Andere Mängel beziehen sich auf die Begrenzung des Übersetzungsbereichs des Getriebes durch die Gehäuseabmessungen sowie auf eine konstante Zähnezahl bei Zahnrädern.

Das Getriebe gemäß dem Patent Nr. 2044196 hat auch keine Leergangstellung und keinen Rückgang.

Aus dem Stand der Technik ist auch eine hybride Kraftanlage (Patent der RF Nr. 2264307) bekannt.

Als Magnetkupplung wird hier eine Gleichstrommaschine eingesetzt. Der erste Mangel besteht darin, dass die Kraftanlage seriell über zwei stromführende Stufen gespeist wird, zuerst über stromleitende Ringe und dann über Kollektorlamellen. Das vermindert allerdings die Zuverlässigkeit und die Standzeit der gesamten Baugruppe mindestens um das Zweifache.

Aus dem Stand der Technik ist ein hybrider Antriebssatz bekannt, welcher im Patent der RF Nr. 22264307 beschrieben ist. Die Kennlinie der Gleichstrommaschine ist so, dass bei einer Speisespannungsabnahme die Ankerumdrehungen auch abnehmen und der Belastungsstrom dagegen zunimmt. Somit ist die Konstruktion nur bei einer hohen Ankergeschwindigkeit effektiv, d. h., wenn das stufenlose regelbare Getriebe mit hohen Übersetzungszahlen läuft. Bei niedrigen Übersetzungszahlen des Getriebes ist der Anker in Bezug auf den Läufer praktisch unbeweglich. Über den Stromkreis fließen hohe Belastungsströme. Das entspricht dem Kurzschlussbetrieb für die Gleichstrommaschine. Bei Lastumschlägen sind auch Stromstöße im Leistungskreis der Gleichstrommaschine möglich.

Ein weiterer Mangel der Einrichtung besteht darin, dass eine akute Frequenzänderung der Pulsbreitenmodulation PBM nur sehr schwer möglich ist. Bei einem drastischen Drehmomentanstieg nimmt auch der Laststrom zu. Um die Ankerumdrehungszahl zu steigern, muss logischerweise die Speisespannung erhöht werden. Das wird aber einen Stromstoß verursachen. Bei einer konstanten Speisespannung im belasteten Zustand wird der Anker festgebremst. Somit wird der Stromwert zunehmen, indem er mit dem Stromwert addiert wird, welcher für die Drehmomentübertragung erforderlich ist.

Ein weiterer Mangel der Einrichtung besteht auch darin, dass die Umdrehungszahl des Ankers in Bezug auf den Ständer von der Speisespannung der Gleichstrommaschine abhängig ist. Bei Belastungsdifferenzen wird der Anker ein wenig bremsen bzw. beschleunigen. Dabei wird das Übersetzungsverhältnis des Getriebes innerhalb eines zufälligen" Wertebereichs variieren. Die Drehzahlen des Motors und der Sekundärwelle werden nur mittels eines Drehzahlmessers überwacht. Fängt die Automatik an, gleich nach den Änderungen der Ankerumdrehungszahl die Spannungen zu ändern, werden auch bestimmt Stromstöße im Stromkreis der Maschine folgen.

Durch DE 19539571 A1 ist ein stufenloses hybrides Maschinenregelgetriebe mit Digitalsteuerung bekannt. Das Getriebe enthält einen Gangschalthebel und eine Kupplungswelle, die mit einer Motorwelle verbunden ist. Die Motorwelle und ein Generator sind auf einem Rahmen befestigt. Der Generator ist durch den Motor antreibbar. Das Getriebe umfasst außerdem einen auf der Kupplungswelle befestigten Ständer, der elektrisch mit einer Stromübertragungsvorrichtung verbunden ist. Das Getriebe umfasst ferner einen Läufer, der auf einer Sekundärwelle befestigt ist und auf einem Lager rotiert. Auf dem Rahmen ist eine Baugruppe befestigt, die aus einem Optokoppler-Geber mit einem Empfänger besteht. Die Baugruppe dient zur Messung der Motordrehzahl. Hierzu rotiert zwischen Optokoppler-Geber und Empfänger eine geschlitzte Scheibe. Auf dem Rahmen ist eine ähnliche Baugruppe befestigt, die zur Drehzahlmessung der Sekundärwelle dient. Das stufenlose regelbare Getriebe weist eine Steuereinheit für Pulsbreitenmodulation (PBM) auf, die für die Steuerung von Leistungsschalter zuständig ist. Die Leistungsschalter steuern die Wicklungen des Läufers.

Durch US 2003/184170 A1 ist eine Vorrichtung zur Bestimmung von Drehmoment und Stromfluss in einem Wechselstrom-Synchron-Motor bekannt. Der Motor umfasst eine Motorwelle, welche magnetisch mit einem Erste-Phase-Stator, einem Zweite-Phase-Stator und einem Dritte-Phase-Stator gekoppelt ist. Ein Drehwinkelgeber ist mit der Motorwelle verbunden. Ein Stromkreis zur Erfassung der Stromstärke erzeugt ein der momentanen Stromstärke des Motors proportionales Stromsignal. Die Stromstärke wird zu diskreten Zeitpunkten erfasst, wenn ein Auslösesignal eines Signalgenerators erfasst wird. Anhand der erfassten Stromstärke werden Drehmoment und Stromfluss im Motor berechnet.

Durch EP 1582845 A2 ist eine Steuereinheit für auch als Pulsweitenmodulation bekannte Pulsbreitenmodulation (PBM) bekannt.

Es ist Aufgabe der Erfindung ein stufenloses, hybrides Maschinenregelgetriebe mit Digitalsteuerung der eingangs erwähnten Art zu entwickeln, bei der die Zuverlässigkeit erhöht, der Regelbereich der Übersetzungszahl der stufenlosen Kraftübertragung erweitert, der Umkehrbetrieb und der Leerlauf sichergestellt, die Lebensdauer verlängert, die Steuerbarkeit des stufenlosen regelbaren Getriebes verbessert und das Fehlen von jeglichen Begrenzungen des Leistungsanstiegs bei einfachem Aufbau sichergestellt ist.

Die gestellte Aufgabe wird mit den Merkmalen des Anspruchs 1 gelöst.

Das technische Ergebnis wird dabei folgenderweise erreicht. Das stufenlose regelbare Getriebe enthält einen Gangschalthebel und eine Kupplungswelle, die mit einer Motorwelle verbunden ist. Die Motorwelle und ein Generator sind auf einem Rahmen befestigt. Der Generator wird durch den Motor über den Riementrieb angetrieben. Dieses stufenlose regelbare Getriebe ist dadurch gekennzeichnet, dass ein Ständer auf der Kupplungswelle befestigt und elektrisch mit einer Stromübertragungsvorrichtung verbunden ist, dass ein Läufer auf einer Sekundärwelle befestigt ist und auf einem Lager rotiert, dass auf dem Rahmen eine Baugruppe befestigt ist, die aus einem Optokoppler-Geber mit einem Empfänger besteht, dass zwischen diese eine geschlitzte Scheibe rotiert, dass die Baugruppe zur Messung der Motordrehzahl dient, dass auf dem Rahmen eine ähnliche Baugruppe befestigt ist, deren Funktion der Drehzahlmessung der Sekundärwelle dient, dass das stufenlose regelbare Getriebe eine Steuereinheit für Pulsbreitenmodulation aufweist, welche für die Steuerung von Leistungsschaltern zuständig ist, dass die Leistungsschalter die Einspeisung der Läuferwicklungen steuert, dass das stufenlose regelbare Getriebe auch einen steuerbaren Frequenzteiler und einen Rechner aufweist, dass der Rechner zur Übertragung eines Kodes dient, mit dessen Hilfe das Frequenzteilungsverhältnis festlegbar und in den Frequenzteiler weiterleitbar ist, dass das stufenlose regelbare Getriebe Geber aufweist, die bei Betätigung eines Fußbremshebels und eines Beschleunigungspedals auslösbar sind, dass das stufenlose regelbare Getriebe einen Nebenschluss aufweist, der zum Abgreifen eines Zusatzwiderstandes für eine Spannungsmessung dient und dass das stufenlose regelbare Getriebe einen spannungsgesteuerten Generator aufweist, dessen Funktion die Messung des Belastungsstroms im Stromkreis des stufenlosen regelbaren Getriebes ist.

Das stufenlose regelbare Getriebe weist außerdem:
- einen Timer zur Bestimmung einer der Motordrehzahl indirekt proportionalen Größe A,
- einen Timer zur Bestimmung einer der Drehzahl der Sekundärwelle indirekt proportionalen Größe B und
- eine mit den Timern verbundene Recheneinheit auf, welche eine von den Größen A und B abhängige Größe C bestimmt, mit der die Synchronisation zwischen Ständer und Läufer erfolgt.

Das stufenlose regelbare Getriebe kann Elemente für die Stromübertragungsvorrichtung enthalten.

Das stufenlose regelbare Getriebe kann einen zusätzlichen Generator enthalten, dessen Läufer unbeweglich auf dem Rahmen befestigt ist. Der Läufer wird mit Drehstrom gespeist. Der Ständer des zusätzlichen Generators versorgt den Ständer des stufenlosen regelbaren Getriebes. Es enthält auch einen Sender zur Übertragung der Daten über die Drehmomentgröße. Auf dem Rahmen ist ein Empfänger befestigt. Der Empfänger dient zur Datenübertragung zum Eingang des Rechners. Es enthält auch einen Umschalter, der mit einem Getriebeschalthebel steuerbar ist. Seine Funktion ist die Permutation von zwei Phasen, die den zusätzlichen Generator versorgen, sowie die Impulsgabe an die Leistungsschalter zu sperren.

Dabei variieren die Übersetzungszahlen innerhalb eines größeren Bereichs, weil sie durch die Änderung der Kenngrößen einer Pulsbreitenmodulation (PBM) festgelegt sind. Der Übersetzungsbereich ist von den Gehäuseabmessungen unabhängig. Die Magnetkupplung verwendet eine Synchronmaschine, die über stromleitende Ringe gespeist wird. Es ist auch eine Ausführung ohne stromleitende Ringe möglich, denn diese Ringe sind die Bauteile mit der kürzesten Lebensdauer.

Die Umdrehungszahl des Läufers hängt in Bezug auf den Ständer von der Speisefrequenz der Läuferwicklungen ab. Was die Belastungsstromstöße anbelangt, so überwacht der Rechner nur die Drehmomentgröße. Bei einem geringen Befastungsgefälle bleibt daher das Übersetzungsverhältnis des Getriebes unverändert. Nur bei beachtlichen Drehmomentänderungen entscheidet der Rechner das Übersetzungsverhältnis des stufenlosen regelbaren Getriebes zu ändern. Wichtig ist auch das Übersetzungsverhältnis des Getriebes mit hoher Genauigkeit vorgeben zu können.

Weitere vorteilhafte Weiterbildungen des Maschinenregelgetriebes sind den Unteransprüchen entnehmbar.

Die Erfindung wird anhand von in den Zeichnungen dargestellten Ausführungsbeispielen näher erläutert. Es zeigen:
- Fig. 1: eine Konstruktionsanordnung eines stufenlosen regelbaren Getriebes,
- Fig. 2: die bauliche Darstellung eines die Motordrehzahl messenden Dreh- zahlmessers,
- Fig. 3: die schematische Darstellung des Drehzahlmessers nach Fig. 2,
- Fig. 4: die bauliche Darstellung eines die Drehzahl der Sekundärwelle mes- senden Drehzahlmesser,
- Fig. 5: die schematische Darstellung des Drehzahlmessers nach Fig. 4,
- Fig. 6: das Blockschaltbild der Drehzahlmessung des Motors und der Se- kundärwelle und der Messung der Übersetzungszahl des stufenlosen regelbaren Getriebes,
- Fig. 7: das Blockschaltbild der Drehmomentmessung auf dem stufenlosen regelbaren Getriebe,
- Fig. 8: das Übersichtsschaltbild des Rechners des stufenlosen regelbaren Getriebes,
- Fig. 9: die Konstruktionsanordnung eines bürstenlosen stufenlosen regelba- ren Getriebes,
- Fig. 10: das Übersichtsschaltbild des Rechners des bürstenlosen stufenlosen regelbaren Getriebes,
- Fig. 11: den Einbau des Motors (Synchronmaschine) in die Kraftanlage,
- Fig. 12: das Übersichtsschaltbild des Rechners des E-Motors,
- Fig. 13: das vereinfachte Schema des kombinierten Einbaus des Getriebes und des E-Motors und
- Fig. 14: die Zusammenwirkung der Differentialeinrichtung und den Bausteinen des Rechners, wobei die Differentialeinrichtung die Funktion des Ge- triebes und des E-Motors steuert.

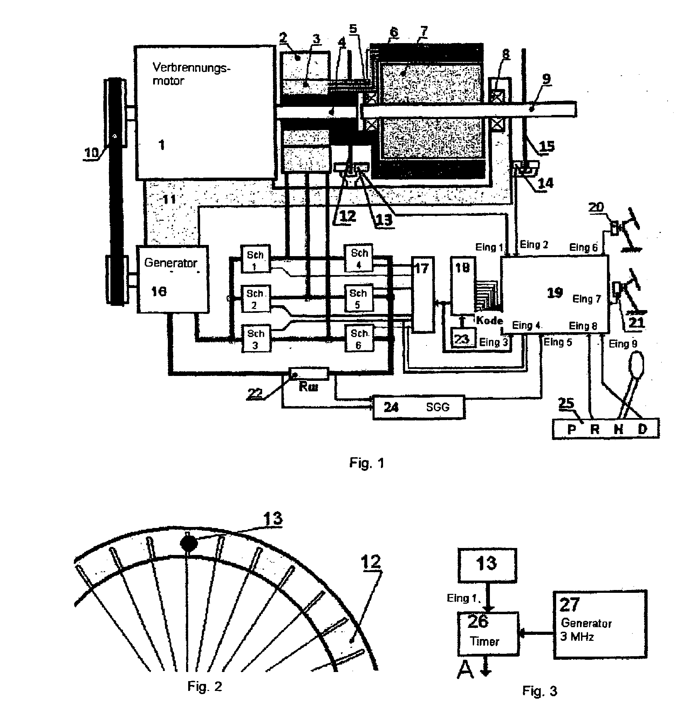

In der Fig. 1 ist die Konstruktionsanordnung des stufenlosen regelbaren Getriebes abgebildet, und zwar bezeichnet:
- 1 -: den Verbrennungsmotor;
- 2 und 3 -: die Elemente der Stromübertragungsvorrichtung;
- 4 -: die Kupplungswelle des Getriebes (verbunden mit der Motorwelle);
- 5 -: das Lager (Zwischenlager zwischen der Kupplungswelle und der Se- kundärwelle),
- 6 -: der auf der Kupplungswelle (4) befestigte Ständer; der Ständer ist e- lektrisch mit der Stromübertragungsvorrichtung (3) verbunden,
- 7 -: den Läufer, der auf der Sekundärwelle (9) befestigt wird,
- 8 -: das Lager,
- 9 -: die Sekundärwelle, die auf dem Lager (8) rotiert,
- 10 -: den Riementrieb,
- 11 -: den Rahmen, worauf der Motor sowie der Generator (16) befestigt sind,
- 12 -: die geschlitzte Scheibe, die die Motordrehzahl verändert (d. h. sie stellt einen Drehzahlmesser dar) und zwischen Geber und Empfänger rotiert,
- 13 -: den Geber - Optokoppler - der auf dem Rahmen (11) befestigt ist,
- 14 -: den Geber, der auf dem Rahmen (11) befestigt ist,
- 15 -: die geschlitzte Scheibe (15), die zwischen dem Geber und dem Emp- fänger rotiert und die Drehzahl der Sekundärwelle (9) verändert (d. h., sie stellt einen Drehzahlmesser dar)
- 16 -: den Generator, der mit dem Motor über den Riementrieb (10) angetrie- ben wird
- 17 -: die Steuereinheit der Pulsbreitenmodulation (PBM); die Steuereinheit steuert die Leistungsschalter (Schalter 1 - Schalter 6),
- 18 -: den steuerbarer Frequenzteiler (Frequenzsynthesizer) - er teilt die Fre- quenz von 50 MHz, die durch den Bezugsgenerator (23) erzeugt wird. Das Frequenzteilungsverhältnis wird durch eine Kode festgelegt, wel- cher für den Frequenzteiler (18) vom Rechner (19) vorgegeben wird,
- 19 -: den Rechner
- 20 -: den Pedalschalter, der bei der Betätigung des Fußbremshebels ausge- löst wird,
- 21 -: den Pedalschalter, der bei der Betätigung des Beschleunigungspedals ausgelöst wird,
- 22 -: den Nebenschluss, dessen Widerstand durch die Messspannung ab- gegriffen wird,
- 24 -: ein spannungsgesteuerter Generator, der zur Messung von Belas- tungsstrom im Stromkreis des stufenlosen regelbaren Getriebes dient,
- 25 -: den Gangschalthebel.

Die Drehzahl des Ständers 6 beträgt 2000 U/min. An die Wicklungen des Ständers 6 wird Drehstrom mit einer solchen Frequenz angelegt, dass die Drehzahl des Drehfeldes ebenfalls 2000 U/min beträgt, jedoch in der dem Ständer entgegengesetzten Richtung. Dabei bleibt die Sekundärwelle 9 unbeweglich (dies kann als "Nullgang" definiert werden).

Die Umdrehungszahl des Magnetfeldes wird zum Beispiel bis zu 2100 U/min erhöht. Gemäß der Zusammenwirkung der Magnetfelder dreht sich die Sekundärwelle 9 in entgegengesetzter Richtung mit 100 U/min (das ist der Umkehrgang). Nun sei die Umdrehungszahl des Magnetfeldes bis zu 1900 U/min abgebaut. Die Motorwelle macht 2000 U/min, und der Läufer 7, welcher durch den Ständer 6 mitgerissen wird, macht 100 U/min. Bei einer weiteren Herabsetzung der Drehzahl des Magnetfeldes wird die Drehzahl der Sekundärwelle 9 zunehmen. Wird die Null-Drehzahl des Magnetfeldes erreicht, so werden an den Ständer 6 des Getriebes Gleichspannungsimpulse anstatt Wechselstromimpulse gegeben, indem der Ständer 6 und der Läufer 7 gegenseitig unbeweglich zurückgehalten werden. Dabei dreht sich die Sekundärwelle 9 mit derselben Drehzahl wie die Kupplungswelle 4 (das ist der Direktgang). Danach fängt das Drehmagnetfeld beim Einschalten des Umkehrganges der Ständerspeisung (Permutation von zwei Phasen) an und sich in die gleiche Richtung zu drehen wie die Motorwelle.

Die Drehzahl der Sekundärwelle 9 wird durch die Addition der Geschwindigkeiten - der Drehung des Motor-Schwungrades und der Drehung des Magnetfeldes - festgelegt. Dabei wird die Sekundärwelle 9 das Schwungrad überholen (das ist die Übersetzung ins Schnelle: ähnlich wie bei einem mechanischen Getriebe im 5. Gang).

Der steuerbare Frequenzteiler 18 kann z. B. aus Mikroschaltungen K15331E10 (K1533 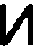 E10) bestehen. Sie haben Eingänge für eine vorläufige Kode-Aufnahme. Jeder Frequenzteiler 18 teilt die Frequenz in 16-mal auf. Deswegen teilen die 4 in Serie geschalteten Zähler die Frequenz in 65536 Teile ein. Die Frequenz des Bezugsgenerators ist 50 MHz, geteilt durch 65536 macht 763 Hz aus.

Bei einer Modulationsfrequenz von 2 kHz wird die Motordrehzahl 60 U/min betragen.

Bei einer Motordrehzahl von 2000 U/min wird die Modulationsfrequenz des "Nullganges", welche an den Eingang der Steuereinheit 17 von PBM gegeben wird, 66,666 kHz betragen. Dabei wird die Drehzahl des Getriebes 2000 U/min betragen. Dafür wird für den Frequenzteiler 18 am Anfang jedes Zählzyklus ein Kode: 65536 - 750 aufgenommen.

Der Zähler zählt 750 Impulse des Bezugsgenerators 50 MHz ab, und am Ausgang des Frequenzteilers 18 ergibt sich eine Frequenz von 66,666 kHz.

Im ersten Gang beträgt das Übersetzungsverhältnis des Getriebes 1:4. Das heißt, bei einer Motordrehzahl von 2000 U/min dreht sich die Sekundärwelle 9 mit einer Drehzahl von 500 U/min um. Dafür wird die Drehzahl des Läufers 7 in Bezug auf den Ständer 6 1500 U/min betragen. Die Modulationsfrequenz am Eingang der PBM - Steuereinheit 17 ist 50 kHz. Der für den Eingang des Frequenzteilers 18 aufgezeichnete Kode wird 65536 - 1000 sein.

Wird das Übersetzungsverhältnis 1:4 von "Nullgang" in den ersten Gang geändert, so ändert sich auch der am Eingang des Frequenzteilers 18 aufgezeichnete Kode vom Wert 65536 - 750 bis zum Wert 65536 - 1000. Das heißt, zwischen dem "Nullgang" und dem ersten Gang (1:4) kann der Rechner 250 Festgänge variieren.

Die Scheibe 12 (siehe Fig. 2; Ansicht von der Seite der Drehachse) hat 120 Schlitze. Beim Drehen des Motors kommen die Impulse vom Optokoppler-Geber 13 (s. Fig. 2) in den Rechner 19 (Fig. 1). Auf diese Weise arbeitet der Drehzahlmesser des Motors. Über den Eingang 1 kommen die Impulse beim Timer 26 (Fig. 3) ein. Dabei schaltet sich der Timer 26 in den Zählbetrieb ein. Beim nächsten Impuls wird der Zählvorgang abgeschlossen.

Beim Zählen zählt der Timer 26 die vom Generator 27 (Fig. 3) kommenden Impulse ab.

Die empfangene Größe "A" wird zum Timerausgang weitergeleitet. Diese Größe ist der Motordrehzahl indirekt proportional. Macht der Motor bei einer Drehzahl von 2000 U/min z. B. eine Umdrehung in 30 ms, so wird das Impulsintervall am Eingang 1 des Timers 26 250 µs sein. Innerhalb dieser Zeit wird der Timer 750 Impulse des Generators 27 (mit der Frequenz 3 MHz) abzählen. Die Digitalgröße "A" wird 750 betragen.

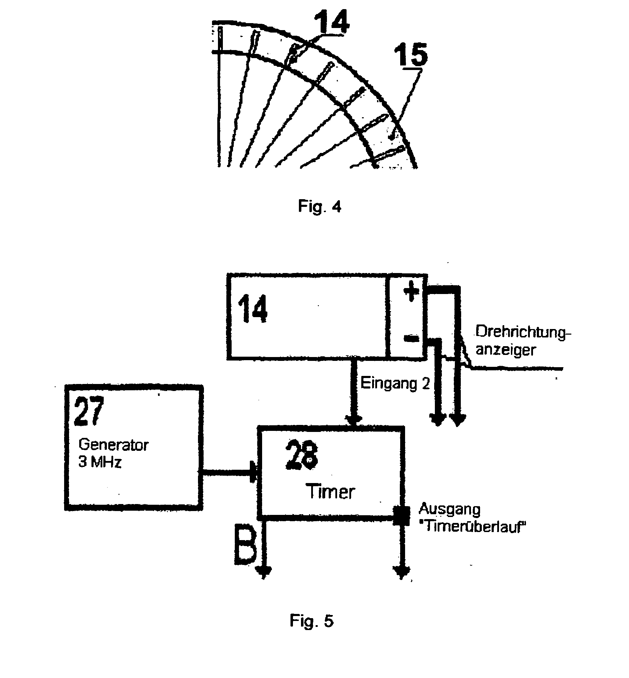

Der Drehzahlmesser misst die Drehzahl der Sekundärwelle 9. Der Drehzahlmesser besteht aus dem auf dem Rahmen 11 befestigten Geber 14 (Optokoppler). Zwischen dem Geber 14 und dem Empfänger dreht sich die geschlitzte Scheibe 15. Die Scheibe 15 (s. Fig. 4, Ansicht von der Seite der Drehachse) weist 120 Schlitze auf. Beim Drehen der Sekundärwelle 9 kommen die Impulse vom Optokoppler-Geber (14, Fig. 4) zum Rechner (19, Fig. 1). Über den Eingang 2 kommen die Impulse zum Timer (28, Fig. 5). Dabei schaltet sich der Timer 28 in den Zählbetrieb ein, und beim nächsten Impuls wird der Zählvorgang abgeschlossen.

Während des Zählvorgangs zählt der Timer 28 die Impulse ab, die vom Generator (27, Fig. 5) kommen.

Die resultierende Größe "B" wird an den Timerausgang weitergeleitet. Diese Größe ist der Drehzahl der Sekundärwelle 9 indirekt proportional.

Bei einer Drehzahl von 200 U/min macht die Sekundärwelle 9 z. B. eine Umdrehung in 300 ms. Das Impulsintervall am Eingang 2 von Timer 28 beträgt 2500 µs. Innerhalb dieser Zeit wird der Timer 28 7500 Impulse des Generators 27 (mit einer Frequenz 3 MHz) abzählen. Die Digitalgröße "B" wird 7500 betragen.

Der Geber 14 (Fig. 4) hat zwei Optokoppler, die ungefähr mit einem Abstand von 0,5 Grad auf einer Kreislinie angeordnet sind. Beim Drehen der Sekundärwelle 9 gibt einer der Optokoppler einen Impuls an den Timer 28 ab. Der gleiche Optokoppler schließt den Zählvorgang ab. Anhand des Impulses wird auf dem zweiten Optokoppler die Drehrichtung der Sekundärwelle 9 bestimmt. Die Daten werden vom Ausgang «+» oder «-» an "Rotationsindikator" (Eingang 2, Fig. 5) ausgegeben. Beim Wechsel der Drehrichtung wechseln die Optokoppler 14 ihre Rollen.

Die Zählgrenze des Timers 28 beträgt 2,5 Mio. Impulse. Liegt die Drehzahl der Sekundärwelle 9 unter 0,6 U/min, kommt ein Timerüberlauf zustande, der ein Signal zum Ausgang "Timerübertauf" (Fig. 5) abgibt. Das gleiche Signal "Timerüberlauf" wird auch am Ausgang des Timers 28 ganz am Arbeitsanfang, sofort nach Anlegen der Spannung abgegeben. Bei einer Drehzahl von unter 0,6 U/min kann die Sekundärwelle 9 als unbeweglich gelten. Das stufenlose regelbare Getriebe (bei vorgegebenen Kenndaten) stellt ein maximales Übersetzungsverhältnis von 1500 - 1600 sicher.

Die Messung der Motor- und der Sekundärwelledrehzahl sowie die Änderung der Übersetzungszahl des Getriebes erfolgt wie folgt.

Der steuerbare Frequenzteiler 18 zeichnet einen Kode auf, welcher an seinen Eingang weitergeleitet wird, um die Frequenz zu bestimmen, die für die PBM - Modulation des stufenlosen regelbaren Getriebes erforderlich ist.

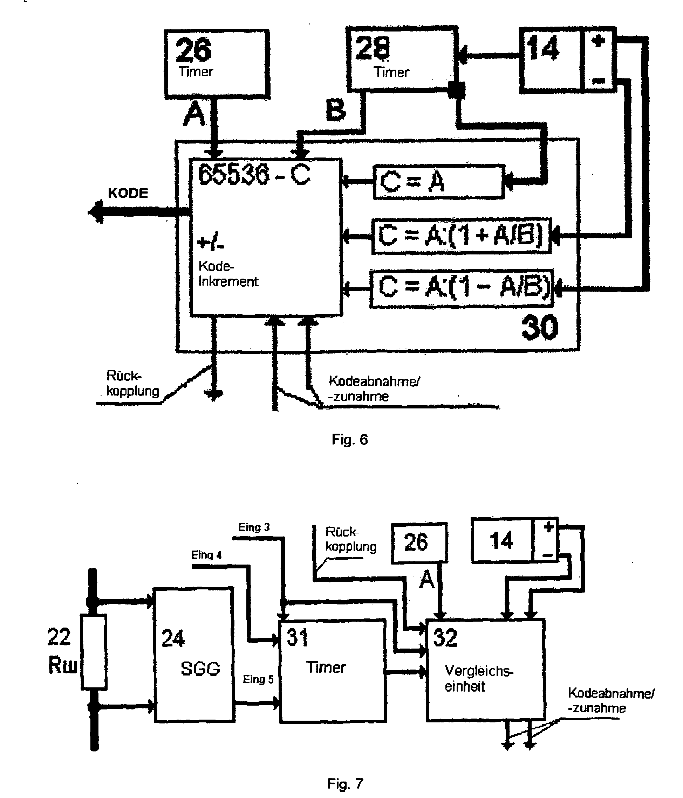

Dafür werden die Größe "A" vom Ausgang des Timers 26 und die Größe "B" vom Ausgang des Timers 28 in den Rechner (30, Fig. 6) gesendet. Es ist vor allem wichtig, die Geschwindigkeit des Läufers 7 in Bezug auf den Ständer 6 im stufenlosen regelbaren Getriebe zu synchronisieren.

Nun werden einige Fälle näher betrachtet. Fall 1: Die Sekundärwelle 9 ist noch unbeweglich.

Der Timer 28 (Fig. 6) gibt ein Signal "Timerüberlauf" an den Eingang der Recheneinheit (30, Fig. 6) aus, welches einen Kode-Berechnungsablauf festlegt. Der Kode wird an den Frequenzteiler 18 weitergeleitet. In diesem Fall (wenn C = A) legt die Größe "C" die Frequenz fest, welche an den Eingang der Steuereinheit 17 der PBM (Fig. 1) gesendet wird.

Z.B., bei einer Drehzahl von 2000 U/min macht der Motor 1 Umdrehung in 30 ms. Das Impulsintervall am Eingang 1 von Timer 26 beträgt 250 µs. Innerhalb dieser Zeit wird der Timer 750 Impulse des Generators 27 (mit einer Frequenz von 3 MHz) abzählen. Die Digitalgröße "A" wird gleich 750 sein. Der Kode am Eingang des Frequenzteilers 18 wird 65536-750 sein. Die Frequenz am Eingang der PBM-Steuereinheit 17 wird 66,666 kHz betragen. Der Läufer 7 dreht sich mit 2000 U/min um und die Sekundärwelle 9 bleibt unbeweglich. Das ist der oben erwähnte "Nullgang".

Wird nun der Wert "-1" an den Eingang "Kodeabnahme / -zunahme" gesendet, so wird der Kode am Eingang des Frequenzteilers 18 65536-750-1 betragen. Die Frequenz am Eingang der PBM-Steuereinheit 17 wird 66,578 kHz betragen. Dementsprechend wird die Umdrehungszahl des Läufers 7 in Bezug auf den Ständer 6 1997,3 U/min, die Umdrehungszahl der Sekundärwelle 9 2,66 U/min, und das Übersetzungsverhältnis des Getriebes wird gleich 751 sein.

1000 Impulse später (also 15 Millisekunden danach) wird der Kode am Ausgang des Frequenzteilers 18 bis zur Größe 65536-750-2 abgeändert. Die Frequenz am Eingang der PBM-Steuereinheit 17 wird 66,489 kHz, die Umdrehungszahl des Läufers 7 1994,7 U/min, die Umdrehungszahl der Sekundärwelle9 5,32 U/min und das Übersetzungsverhältnis des Getriebes 376 sein. Nachher wird der Kode alle 1000 Impulse am Ausgang des Frequenzteilers 18 geändert und ungefähr 5 Sekunden später wird der Kode den Wert von 65536-1000 und die Übersetzungszahl des Getriebes 1:4 erreichen (das entspricht dem 1. Gang in üblichem Getriebe). Im Falle einer Kode-Änderung erfolgen die Umschaltungen des Getriebes etwas ruckweise. Bei einer Änderung der Impulsdauer um 0,02 µs (die Frequenz des Bezugsgenerators des Frequenzteilers 18 ist 50 MHz) werden solche Stöße unmerklich sein, und die Zusammenwirkung der Magnetfelder von Ständer 6 und Läufer 7 wird eine weiche Drehmomentübertragung sicherstellen, wie wenn die Einrichtung mit Federn ausgerüstet wäre.

Der nächste Schritt ist ein Synchronisierungsvorgang.

Das oben beschriebene Verfahren zur Änderung der Übersetzungszahlen des stufenlosen regelbaren Getriebes gilt nur für den Anfang der Bewegung und nur bei sehr geringer Drehzahl der Sekundärwelle 9. Während der Fahrt synchronisiert die Recheneinheit 30 den Ständer 6 und den Läufer 7 des stufenlosen regelbaren Getriebes, indem sie die von den Timern 26 und 28 kommenden Daten vergleicht. Die Größen "A" und "B" werden an den Eingang der Einrichtung 30 gesendet. Der Drehzahlmesser (Geber 14) bestimmt durch die am Ausgang angeordneten "Rotationsindikatoren" den Kode-Berechnungsablauf für den Frequenzteiler 18. Die Sekundärwelle 9 dreht sich z. B. vorwärts. Der Ausgang "+" von Geber 14 bestimmt den Kode-Berechnungsablauf für die Einrichtung 30 [C = A:(1 - A/B] (Fig. 6). Der Kode mit dem Wert 65536-C stellt eine Synchronisation von Ständer 6 und Läufer 7 des stufenlosen regelbaren Getriebes sicher. Danach wird an den Eingang "Kodeabnahme/-zunahme" der Einrichtung 30 ein Kodeabnahme-Wert gesendet. Damit wird das Übersetzungsverhältnis des stufenlosen regelbaren Getriebes geändert. Die Kodeabnahme erfolgt nach dem Empfang einer bestimmten Anzahl der Impulse vom Ausgang des Frequenzteilers 18. Die Menge der Impulse kann sich je nach Größe des Drehmoments, den vorgegebenen Einstellungen usw. ändern. Damit wird die Übersetzungszahl des stufenlosen regelbaren Getriebes geändert. Die Kodeabnahme kann bis zu einem Zeitpunkt angesammelt werden, wenn die neuen Größen von A und B von den Drehzahlmessern 13 und 14 abgezählt und für die Ausgänge der Timer 26 und 28 umgeschrieben sind. Anhand der neuen Werte A und B bestimmt die Recheneinheit 30 die Größe C und synchronisiert auf diese Weise der Läufer 7 und den Ständer 6 des stufenlosen regelbaren Getriebes. Danach fängt die Recheneinheit 30 an, den Kode zu vermindern.

Bei der Fahrt im Rückwärtsgang wird vom Ausgang "-" von Timer 14 der Ablauf für die Berechnung der Größe bestimmt [C = A:(1+ A/B)], um den Läufer 7 und den Ständer 6 zu synchronisieren. Die Änderung des Übersetzungsverhältnisses des Getriebes erfolgt mittels einer Kode-Zunahme. Danach wird das Drehmoment auf dem stufenlosen regelbaren Getriebe gemessen. Die Umdrehungszahl des Läufers 7 in Bezug auf den Ständer 6 im stufenlosen regelbaren Getriebe hängt von der Synchronisierungsfrequenz ab. Sie ist jedoch von der Belastung der Sekundärwelle unabhängig. Beim Lastwechsel auf der Sekundärwelle 8 (z. B., beim Bergauffahren nach einer ebenen Strecke) nimmt der Laststrom in den Ständerwicklungen des Getriebes und folglich im Stromkreis des Nebenschlusses 22 (Fig. 1; Fig. 7) zu. Auf dem Nebenschluss 22 entsteht die Spannung, welche dem Lastrom proportional ist. Der spannungsgesteuerte Generator 24 ist an den Nebenschluss 22 angeschlossen (Fig. 1; Fig. 7). Der spannungsgesteuerte Generator (SGG) 24 ändert die Frequenz am Ausgang je nach der Spannung (Belastungsstrom) auf dem Nebenschluss 22. Die Frequenz von SGG 24 wird über den Eingang 5 (Fig. 1) an den Timer 31 (Fig. 7) gesendet. Vom Ausgang des steuerbaren Frequenzteilers 18 (Fig. 1) wird die Modulationsfrequenz über den Eingang 3 (Fig. 1) zum Timer 31 gesendet.

Zwei Ausgänge der PBM - Steuereinheit 17 sind über den Eingang 4 (Fig. 1) an den Timer 31 angeschlossen. Sobald der PBM-Impuls entsteht, kommt am Eingang 4 eine Freigabe für den Timer 31, die vom SGG 24 kommenden Impulse zu zählen. Das Zählen fängt jedoch nicht sofort an, sondern nach einigen (z. B. 3 - 4) Impulsen vom Eingang 3. Der Timer 31 zählt die Impulse des Generators 24 innerhalb eines genau vorgegebenen Intervalls von z.B. 5 µs ab. Die resultierende Digitalgröße am Ausgang von Timer 31 stellt die Drehmomentgröße auf dem stufenlosen regelbaren Getriebe dar.

### Vergleich der Drehmomente

Jeder Motordrehzahl entspricht ein gewisses optimales Drehmoment an der Welle. Nimmt das Drehmoment zu, so muss in einen untersetzenden Gang umgeschaltet werden. Beim abnehmenden Drehmoment muss umgekehrt in den Schnellgang umgeschaltet werden (das heißt, das Übersetzungsverhältnis des stufenlosen regelbaren Getriebes muss verringert werden), damit der Motor seine Leistung nicht vergebens verbraucht.

Die Drehmomentgröße kann in vier Intervalle (aufsteigend) eingeteilt werden:
a) zu niedrig - wenn der Motor unbelastet läuft.
b) optimal - wenn der Motor im Sparbetrieb läuft.
c) nominal (Nennwert) - wenn der Motor mit erhöhtem Drehmoment läuft, z. B. während der Beschleunigung.
d) überhöht - wenn der Motor bei unzulässiger Belastung läuft.

Das Nennmoment kann weitgehend geändert werden - vom dem Optimalwert bis zu einem überhöhten Momentwert, je nach Belastung und Betriebsart.

Die Vergleichseinheit 32 (Fig. 7) empfängt den "A"-Wert (Motorumdrehungen) vom Timer 26. Anhand der Tabelle im internen Speicher ermittelt sie das optimale Drehmoment, indem sie den Tabellenwert mit dem aktuellen Ist-Wert des Drehmoments auf dem stufenlosen regelbaren Getriebe vergleicht. Der Ist-Wert des Drehmoments wird an die Vergleichseinheit im Timer 31 (Fig. 7) gesendet.

Die Aufgabe der Vergleichseinheit ist eine Anpassung des aktuellen Drehmoments an den Optimalwert (den sparsamsten Wert gemäß der Tabelle).

Das wird mittels einer Änderung des Übersetzungsverhältnisses des Getriebes erreicht, und zwar mittels der Abnahme oder Zunahme des Kodes, die vom Ausgang der Vergleichseinheit 32 (Fig. 7) an die Recheneinheit 30 (Fig. 6) gesendet wird.

Steigt das aktuelle Drehmoment an dem stufenlosen regelbaren Getriebe ein wenig an (z. B. beim Bergauffahren nach einer ebenen Strecke), so fängt die Vergleichseinheit 32 an, den Kode zu vergrößern, indem das Übersetzungsverhältnis des stufenlosen regelbaren Getriebes erhöht wird. Und umgekehrt: Sinkt das aktuelle Drehmoment, so muss das Übersetzungsverhältnis des Getriebes mittels einer Kodeabnahme vermindert werden.

Die Abnahme (Zunahme) des Kodes erfolgt nach einer bestimmten Anzahl der Impulse vom Ausgang des Frequenzteilers 18, welche an den Eingang 3 und danach an den Timer 31 und die Vergleichseinheit 32 (Fig. 7) gesendet werden. Je höher das Ist-Drehmoment ist, desto seltener (nach größerer Anzahl der Impulse vom Ausgang des Frequenzteilers 18) führt die Vergleichseinheit 32 eine Kodeabnahme aus. Folglich wird das stufenlose regelbare Getriebe bei einer hohen Belastung der Sekundärwelle 9 das Übersetzungsverhältnis langsamer ändern, wodurch das für die Beschleunigung ausreichende Drehmoment des Motors sichergestellt wird.

Außerdem ist eine Rückkopplung von der Recheneinheit 30 (Fig. 6) zur Vergleichseinheit 32 (Fig. 7) vorgesehen. Dieser Wert ist gleich "B" geteilt durch "A" und steht für das Übersetzungsverhältnis des stufenlosen regelbaren Getriebes. Das kann auch einfach der "B"-Wert sein, welcher die Drehzahl der Sekundärwelle 9 bedeutet.

Anhand dieser Größen bestimmt die Vergleichseinheit 32 den Bereich, innerhalb dessen das Ist-Drehmoment auf dem stufenlosen regelbaren Getriebe variieren kann. Am Anfang der Beschleunigung kann das Drehmoment die höchsten Größen erreichen, die dem Überholungs-Bereich nahe liegen. Das wird durch die Einheit 32 anhand des Übersetzungsverhältnisses des stufenlosen regelbaren Getriebes festgestellt.

Danach (mit Abbau des Übersetzungsverhältnisses) bekommt das Drehmoment seinen Nennwert, indem es langsam bis zum Optimalwert zurückgeht. Das erfolgt je nach Verringerung des Übersetzungsverhältnisses und der Beschleunigung.

Dabei ist Folgendes zu bemerken. Wenn die Drehmomentgröße sehr hoch bleibt und die Kodeabnahme erst nach sehr vielen Impulsen vom Ausgang des Frequenzteilers 18 erfolgt, hört die Vergleichseinheit 32 auf, die Befehle für eine Kodeabnahme abzugeben.

Damit kann das Übersetzungsverhältnis während einer erhöhten Belastung bei einem bestimmten Wert anhalten. Damit wird dann das ausreichende Drehmoment des Motors sichergestellt, z. B. beim Bergauffahren.

Der Rechner 19 des Getriebes kann folgenderweise ausgeführt werden.

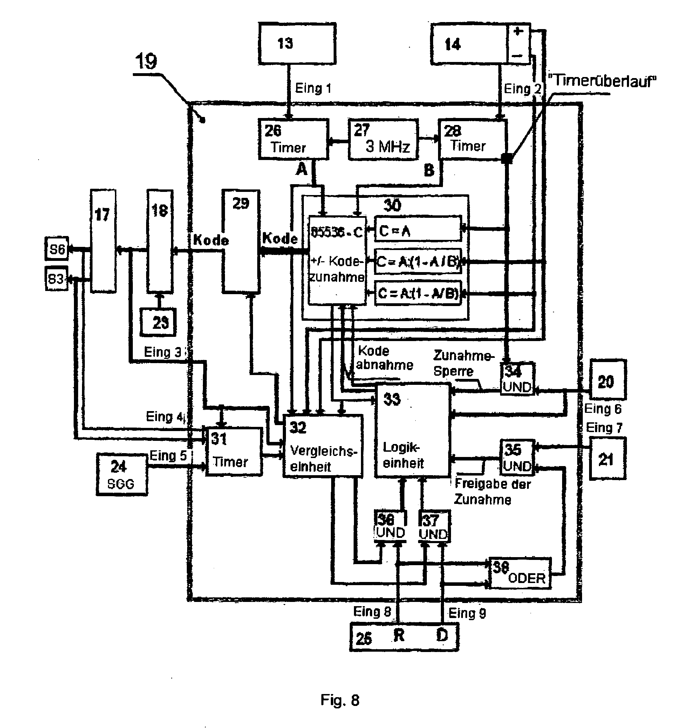

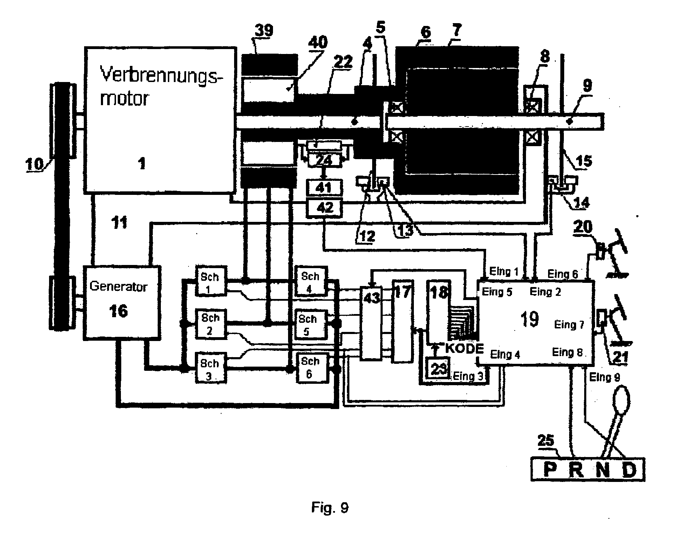

Die Figur 9 zeigt das Übersichtsschaltbild dieses Rechners. Der Kode wird an den Eingang des steuerbaren Frequenzteilers 18 gesendet und in ein Register 29 (Fig. 8) in regelmäßigen Zeitabständen umgeschrieben.

Der Timer 26 ändert die Motordrehzahl und der Timer 28 ändert die Drehzahl der Sekundärwelle 9 und signalisiert da über ein "Anhalten der Sekundärwelle". Anhand der Daten von den Timern 26 und 28 synchronisiert die Recheneinheit 30 den Motor und die Sekundärwelle 9.

Die vom SGG (24, Fig. 7) kommende Größe wird vom Timer 31 als die Drehmomentgröße am stufenlosen regelbaren Getriebe bestimmt. Die Größe des Drehmoments wird vom Timer 31 in die Vergleichseinheit 32 (Fig. 7) gesendet. Die Vergleichseinheit 32 ermittelt die jeweilige Kodeabnahme oder -zunahme. Dadurch wird das Übersetzungsverhältnis des stufenlosen regelbaren Getriebes geändert.

Das Register 29 dient zur Aufzeichnung und Speicherung des Kodes. Der Kode wird per Befehl von der Vergleichseinheit 32 (Fig. 8) überschrieben. Bei geringen Werten des Übersetzungsverhältnisses des Getriebes wirkt sich die Kode-Änderung pro Einheit nur sehr wenig auf die Funktion des stufenlosen regelbaren Getriebes aus. Deswegen kann sich der Kode am Ausgang der Recheneinheit 30 (Fig. 8) innerhalb von einem gewissen Zeitintervall ändern und danach wird er per Befehl der Vergleichseinheit 32 im Register 29 umgeschrieben. Die Häufigkeit der Überschreibung wird anhand des Übersetzungsverhältnisses des Getriebes (aus den Größen A und B) ermittelt. Dafür ist die Rückkopplung zwischen Einheiten den 30 und 32 (in Fig. 8 mit einem Pfeil angegeben) vorgesehen.

Bei hohen Übersetzungsverhältnissen des Getriebes werden die Daten im Register 29 bei jeder Kode-Änderung am Ausgang der Recheneinheit 30 überschrieben.

Die Logikeinrichtung 33 (Fig. 8) legt fest, wann die Freigabe oder Sperre für die Zunahme (bzw. Abnahme) des das Frequenzteilungsverhältnis bestimmenden Kodes erfolgen muss. Bei einer Umschaltung des Hebels 25 (Fig. 1 und 9) in die "R"- oder "D"-Stellung sendet das logische Schaltelement "oder" 38 (Fig. 8) die Freigabe an das logische Schaltelement "und" 35 (Fig. 8). Nach einer Betätigung des Fußgashebels (21, Fig. 1 und 9) entsteht am Ausgang des logischen Schaltelementes 35 das Signal, welches der Logikeinheit 33 die Zunahme (bzw. die Abnahme) des Kodes freigibt. Bei Betätigung des Bremsfußhebels (20, Fig. 1 und 9) wird das Signal an das logische Schaltelement 34 "oder" gesendet.

Sinkt die Drehzahl der Sekundärwelle 9 unter 0,6 U/min, so gibt der Timer 28 (Fig. 8) das Signal "Timerüberschreitung" an das logische Schaltelement 34 ab. Nach dem Befehl des logischen Schaltelementes 34 wechselt die Logikeinrichtung 33 in den Dauerzustand der Kodezunahmesperre (bzw. Kodeabnahmesperre).

Außerdem ist der Pedalschalter 20 auch direkt an die Einrichtung 33 angeschlossen: Bei jeder Betätigung des Bremsfußhebels bekommt die Logikeinheit 33 das Signal über eine temporäre Sperre der Kodezunahme (-abnahme). Das ist erforderlich, um die Trennung des Motors von der Belastung beim kurzzeitigen Bremsen sicherzustellen. In dieser Zeit synchronisiert die Recheneinheit 30 nur die Antriebswelle und die Sekundärwelle 9 nach ihren Drehzahlen.

Das Drehmoment im stufenlosen regelbaren Getriebe wird (höchstwahrscheinlich) bei gleicher Drehzahl unterschiedlich sein und zwar je nach der Drehrichtung der Sekundärwelle 9 - vor- oder rückwärts. Deswegen enthält die Vergleichseinheit 32 (Fig. 7 und 9) zwei Tabellen zur Ermittlung des optimalen Drehmoments (Punkt 10). Die Tabellen sind dabei im internen Speicher für Direkt- und Rückgang gespeichert.

Beim Einschalten des Schalthebels 25 in die "R"-Stellung bekommt das logische Schaltelement "und" 36 (Fig. 8) die entsprechende Freigabe, und die Kode-Zunahme wird von der Vergleichseinheit jener Tabelle gesendet, die dem Rückwärtsgang entspricht. Bei Umschaltung des Hebels 25 in die "D"-Stellung kommt die Freigabe ins logische Schaltelement «und» 37 (Fig. 8). Die Kodeabnahme wird in die Logikeinrichtung 33 aus jener Tabelle gesendet, die dem Direktgang entspricht.

Einige Fahrzustände sind möglich.

### Scharfes Starten

Der Hebel 25 ist in der Leerlaufstellung. Das Beschleunigungspedal wird betätigt. Die Motordrehzahl ist 2000 - 5000 U/min. Die Sekundärwelle 9 ist unbeweglich. Die Recheneinheit 30 synchronisiert die Sekundärwelle 9 an der Größe C = A.

Nach dem Einschalten des Hebels 23 in die "D"-Stellung wird die Kodeabnahme freigegeben. Das stufenlose regelbare Getriebe fängt an, das Übersetzungsverhältnis zu verringern, indem die Häufigkeit der Kode-Änderung nach der DrehmomentGröße (nach SGG-Anzeige 24, Fig. 8) bestimmt wird. Dem Schnelllauf des Motors entspricht auch das große Drehmoment auf dem stufenlosen regelbaren Getriebe. Darüber hinaus entspricht den hohen Übersetzungszahlen des Getriebes auch das erhöhte Drehmoment an der Motorwelle.

Nachfolgend wird die Synchronisierung durch die Einheit 30 gemäß der Formel C = A:(1 - A/B) vorgenommen - in dem Maße wie die Sekundärwelle 9 aufdreht. Das Drehmoment auf dem stufenlosen regelbaren Getriebe bleibt ziemlich hoch (weil die Motordrehzahl auch hoch genug ist). Das ermöglicht es, den Kode-Wert viel schneller zu verringern. Folglich kann auch die Übersetzungszahl des stufenlosen regelbaren Getriebes verringert werden.

### Stufenlose Beschleunigung

Der Motor läuft leer, die Sekundärwelle 9 ist unbeweglich.

Nach der Umschaltung des Hebels 25 in die "D"-Stellung wird das Beschleunigungspedal (21) betätigt. Am Anfang der Bewegung führt die Einrichtung 30 die Synchronisation erst gemäß den Motorumdrehungen (nach der Formel C = A) aus.

Der Motor dreht auf, und alle 1/120 Umdrehung überschreibt der Timer 26 die Daten des Drehzahlmesser 13. Anhand dieser Daten wird die Synchronisation ausgeführt. Dabei wird die Einrichtung 30 die Kode-Größe in Übereinstimmung mit der Synchronisationsfrequenz erhöhen. Die Kodeabnahme für die Gangumschaltung wird gering sein: Zwischen den Datenüberschreibungen auf dem Timer 26 werden solche Intervalle sein, in denen der Motor aufdrehen wird. Deswegen wird das Drehmoment ziemlich hoch sein. Wenn das Beschleunigungspedal 23 sehr schnell betätigt wird und wenn der Motor schneller aufdreht, so wird das Drehmoment hoch genug sein. Die Vergleichseinheit 32 wird der Einrichtung 30 nicht mehr den Befehl über eine Kodeabnahme sondern über eine Erhöhung des Übersetzungsverhältnisses des stufenlosen regelbaren Getriebes abgeben. Das heißt, je intensiver die Betätigung des Beschleunigungspedals 23 ist, desto dynamischer ist die Beschleunigung. Wenn der Motor langsamer aufdreht, und das Drehmoment ziemlich hoch bleibt (z. B. beim Bergauffahren), dann wird der Kode auch in diesem Fall zunehmen, um das Übersetzungsverhältnis bis zur erforderlichen Größe zu erhöhen.

### Gangumschaltung während der Fahrt

Der Hebel 25 ist z. B. in die "R"-Stellung geschaltet. Das Beschleunigungspedal 23 ist betätigt. Der Motor dreht langsam auf. Die Sekundärwelle 9 läuft mit einer gewissen Geschwindigkeit. Nun wird der Hebel 25 unmittelbar während der Fahrt, ohne die Drehzahl des Motors zu verändern, aus der "R"-Stellung in die "D"-Stellung umgeschaltet. Die Freigabe der "Kodezunahme" wechselt zur "Kodeabnahme". Die Recheneinheit 30 fängt an, das Übersetzungsverhältnis des stufenlosen regelbaren Getriebes zu steigern. Deswegen übt das Drehmoment des Motors eine Bremswirkung aus (wie beim mechanischen Getriebe während der Umschaltung in den untersetzenden Gang). Die Bremsintensität (Häufigkeit der Kode-Änderung) wird nach der Drehmomentgröße auf dem stufenlosen regelbaren Getriebe bestimmt. Nachdem die Sekundärwelle 9 völlig gestoppt hat, bekommt das Übersetzungsverhältnis des Getriebes den Nullgang-Wert. Die weitere Kodeabnahme wird das Übersetzungsverhältnis bereits im Direktgang verringern. Als Ergebnis wird das Fahrzeug beschleunigt.

Die angemeldete Einrichtung des Getriebes kann auch als bürstenlose Konstruktion ausgeführt werden.

Aus der Wirkungsweise der Synchronmaschine (s. "Elektrische Maschinen: Synchronmaschinen" I.L. Osin, Yu.G. Schakaryan, herausgegeben von Professor I.P. Kopylov, Moskau, Vysschaya Schkola, 1990) ist bekannt: Wenn der Ständer ans Netz mit einer Frequenz f1 angeschlossen wird, so entsteht in den Wicklungen ein magnetischer Drehfluss mit bestimmten Drehzahl: n1 = 60* f1/p (wobei p die Anzahl der Polpaare ist). Die Winkelgeschwindigkeit wird Ω1 = 2Π * f1/p betragen.

Wird Gleichstrom an die Erregerwicklungen angelegt und der Läufer mit einer Winkelgeschwindigkeit Ω gedreht, so wird die Gleichung Ω = Ω1 als Synchronisationsbedingung gelten. Wenn zwei gleiche Erregerwicklungen vorliegen und wenn sie an eine Zweiphasenstromversorgung mit Wechselstrom und der Frequenz f2 angeschlossen sind, entsteht ein magnetischer Drehfluss mit Drehzahl in Bezug auf den Läufer von n2 = 60 * f2/p und mit Winkelgeschwindigkeit von Ω2 = 2Π * f2/p.

Wenn der Läufer sich mit einer Winkelgeschwindigkeit Ω dreht, so müssen die Winkelgeschwindigkeiten Ω, Ω1, Ω2 durch das Verhältnis Ω1 = Ω + Ω2 verbunden sein. Der Hauptunterschied des bürstenlosen Getriebes aus Fig. 9 besteht darin, dass anstatt der Bürsten und Ringe der Stromübertragungsvorrichtung (Pos. 2 und 3, Fig. 1) ein Generator aufgebaut ist. Der Läufer des Generators 39 (Fig. 9) ist unbeweglich am Rahmen 11 befestigt. Der Generator 39 wird mit Drehstrom gespeist. Der Ständer 40 des Generators 39 (Fig. 9) ist an der Welle des Motors befestigt und dreht sich mit ihr zusammen. Der Ständer 40 des Generators 39 versorgt den Ständer 6 des Getriebes (Fig. 9). Der Nebenschluss 22 und der spannungsgesteuerte Generator (SGG) 24 sind in diesen Stromkreis eingeschlossen: Sie dienen zur Drehmomentmessung auf dem stufenlosen regelbaren Getriebe, wie es im P. 9 angegeben ist. Da der Nebenschluss 22 und der SGG 24 zusammen mit der Motorwelle angetrieben werden, so wird für die Übertragung der Drehmomentdaten ein Sender 41 (Fig. 9) benutzt. Das kann z. B. ein Infrarotstrahler sein.

Auf dem Rahmen 11 ist ein Empfänger 42 (Fig. 9) befestigt, der die Daten an den Eingang 5 des Rechners 19 überträgt.

Die Konstruktion wird durch einen Umschalter 43 ergänzt, der durch den Getriebeschalthebel 25 gesteuert wird (in Fig. 9 nicht abgebildet). Er dient zur Umstellung von zwei Phasen, die den zusätzlichen Generator (39, 40) mit Strom versorgen. Der Umschalter 43 dient auch dazu, um die Impulsgabe an die Schalter 1 - Schalter 6 zu sperren. Diese Schalter steuern die Stromversorgung der Läuferwicklungen. In diesem Fall wird an diese Schalter Gleichstrom angelegt. Die Steuerung erfolgt mittels eines Timers 28 (in Fig. 9 nicht abgebildet).

Die Wirkungsweise des bürstenlosen Getriebes besteht im Folgenden. Aus der Funktion der Synchronmaschine folgt, dass die Drehstromfrequenz Ω1 am Ständerausgang des zusätzlichen Generators 40 (Fig. 9) von der Drehzahl der Motorwelle Ω und der Wechselstromfrequenz Ω2 abhängig ist. Dieser Wechselstrom versorgt die Wicklungen des Ständers 39 (Fig. 9). Aus der Formel Ω1 = Ω + Ω2 folgt: Wenn Gleichstrom (Q2 = 0) an die Läuferwicklungen angelegt wird, so ist Ω1 = Ω. Folglich stimmt die die Wicklungen des Getriebes versorgende Frequenz mit der Drehzahl der Motorwelle überein. Dabei dreht sich das magnetische Feld im Ständer des Getriebes gegenläufig zur Motorwelle. Der Läufer 7 des Getriebes bleibt unbeweglich. Das ist der Nullgang. Dafür ist der Umschalter 43 in der Konstruktion des Getriebes vorgesehen. Er stellt die Sperre der PBM-Impulsgabe an die Schalter (Schalter 1 - Schalter 6) sicher und versorgt sie mit Gleichstrom.

Die Frequenz Ω2 versorgt die Wicklungen des Läufers 39 und wird mit der Frequenz Ω (Formel Ω1 = Ω +Ω2) nur dann addiert, wenn das Magnetfeld des Läufers 39 gegenläufig zur Motorwelle rotiert. Dabei ist die den Ständer des Getriebes versorgende Frequenz höher, als die Drehzahl der Motorwelle. Das magnetische Feld des Getriebeständers rotiert ständig gegenläufig zur Motorwelle. Folglich wird die Drehzahl der Sekundärwelle Ω2 sein. Das ist der Rückwärtsgang.

Wenn nun die Stromversorgung der Schalter beider Läufer 39 des zusätzlichen Generators 40 in den Phasen umgestellt wird, wird sich auch das magnetische Feld in Gegenrichtung drehen, d. h. diese Drehrichtung wird mit der der Motorwelle zusammenfallen. Dabei wird die den Ständer des Getriebes versorgende Drehzahl Ω1 um die Größe Ω2 kleiner sein als die Motordrehzahl Ω. Dies entspricht der Versorgungsdrehzahl des Läufers 39. Die Drehzahl der Sekundärwelle 9 des Getriebes ist gleich Ω2. Das ist der Direktgang.

Wenn der an den Eingang des Frequenzteilers 18 (Fig. 9) gesendete Kode z. B. gleich Null ist, so wird die Frequenz des Generators 23, geteilt durch 65536 gleich 763 Hz betragen. Die den Läufer des Generators 39 versorgende Drehzahl und somit die Drehzahl der Sekundärwelle 9 des Getriebes wird 22,9 U/min sein. Dabei hängt die Drehrichtung der Sekundärwelle 9 des Getriebes von der Wechselstromfrequenz nicht ab, sondern sie wird durch die Drehrichtung des Magnetfeldes festgelegt, welches den Läufer 39 des Generators 40 versorgt.

Wenn die Größe des an den Eingang des Frequenzteilers 18 gesendeten Kodes erhöht wird, wird auch die Drehzahl des Läufers 39 (und folglich auch die Drehzahl der Sekundärwelle 9 des stufenlosen regelbaren Getriebes) zunehmen. Dabei reicht die Drehzahl der Sekundärwelle 9 für die Synchronisation des stufenlosen regelbaren Getriebes aus. Um die Übersetzungszahl des Getriebes zu ändern, muss nur die Kode-Größe erhöht werden.

Anmerkung: Die Drehzahl von 22,9 U/min ist der Mindestwert für dieses spezifische Beispiel. In der Praxis kann er am Anfang der Bewegung die erforderliche Stufenlosigkeit nicht sicherstellen oder für die großen und schweren Vorrichtungen ziemlich hoch sein. Deswegen kann der Frequenzteiler 18 mit größerem Teilungskoeffizient oder ein Generator mit niedrigeren Arbeitsfrequenz eingesetzt werden.

Die Formel n1 = 60* f1/p (p ist die Anzahl der Polpaare) (Punkt 13.1) legt also die Drehzahl der Synchronmaschine fest. Aus dieser Formel folgt auch, dass die Anzahl der Polpaare erhöht werden kann, und damit wird die Drehzahl des Getriebeläufers mehrfach verringert.

Dabei ändert sich auch der Kode-Berechnungsablauf.

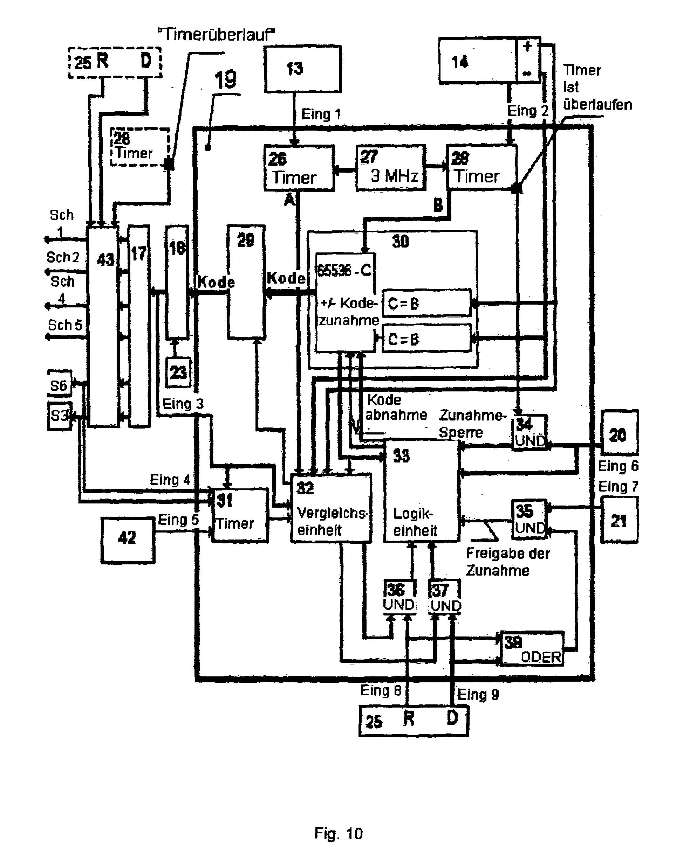

Manche Änderungen werden auch den Rechner 19 betreffen, welcher für die Funktionssteuerung des bürstenlosen stufenlosen regelbaren Getriebes zuständig ist. Die Größe "A" wird nur in die Vergleichseinheit (Fig. 10) gesendet. Danach wird das Moment auf dem stufenlosen regelbaren Getriebe ermittelt, welches der Motordrehzahl entspricht.

Da die Drehzahl der Sekundärwelle für die Synchronisation von Ständer 6 und Läufer 7 des Getriebes ausreicht, bekommt die Recheneinheit 30 nur den "B"-Wert und zwar nur während der Rotation der Sekundärwelle 9 übermittelt.

Bei Umschaltung des Hebels 25 in die "R"- oder "D"-Stellung bekommt der Umschalter 43 die Befehle, die Steuerung von zwei Phasen (Schalter 1, Schalter 2, Schalter 4, Schalter 5) umzustellen. Somit wird die Drehrichtung des den Läufer 39 versorgenden Magnetfeldes (Fig. 10, mit Strichlinie gekennzeichnet) umgeschlagen. Sinkt die Drehzahl der Sekundärwelle 9 unter 0,5 U/min, so löst der Timer 28 den Befehlt "Timerüberlauf aus. Der Ausgang "Timerüberlauf" ist ebenfalls an den Umschalter 43 angeschlossen. Nach seinem Befehlt legt der Umschalter an die Schalter 1 bis 6 Gleichstrom an (Fig. 10, mit Strichlinie gekennzeichnet).

Die Zusammenarbeit des Getriebes und des E-Motors beruht auf folgenden Grundsätzen.

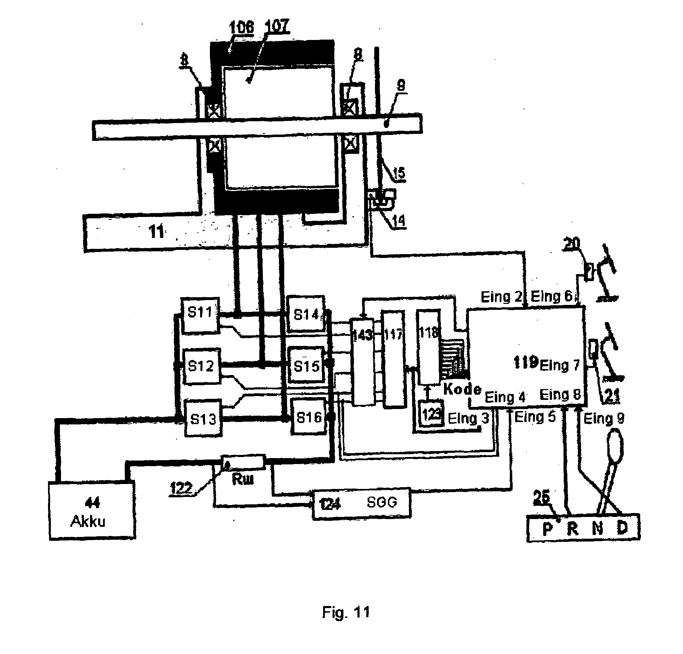

In Fig. 11 ist der Einbau des E-Motors (der Synchronmaschine) in eine Kraftanlage abgebildet. Der Motor und das stufenlose regelbare Getriebe sind nicht abgebildet. In der Verlängerung der Welle 9 ist ein Läufer 107 dargestellt. Alle Bauteile, die ihrer Funktion nach mit den Steuerelementen des Getriebes identisch sind, sind zur Klarheit mit ähnlichen jedoch um 100 größeren Bezugsziffem nummeriert. Z. B., mit der Bezugsziffer 106 ist der Ständer des E-Motors und mit der Bezugsziffer 107 der Läufer des E-Motors gekennzeichnet usw. Die Schalter zur Steuerung der PBM-Modulation sind als Schalter 11 - Schalter 16 gekennzeichnet. Der den E-Motor versorgende Akku ist mit einer Bezugsziffer 44 gekennzeichnet. Der Akku wird vom E-Motor beim Bremsen geladen.

Ein Rechner 119 weist den Kode einen Frequenzteiler 118 zu, welcher die Impulse für eine Steuereinheit 117 für PBM-Modulation erzeugt. Eine Einrichtung 143 dient zur Umstellung von zwei Phasen und zur Rückdrehung des Motors.

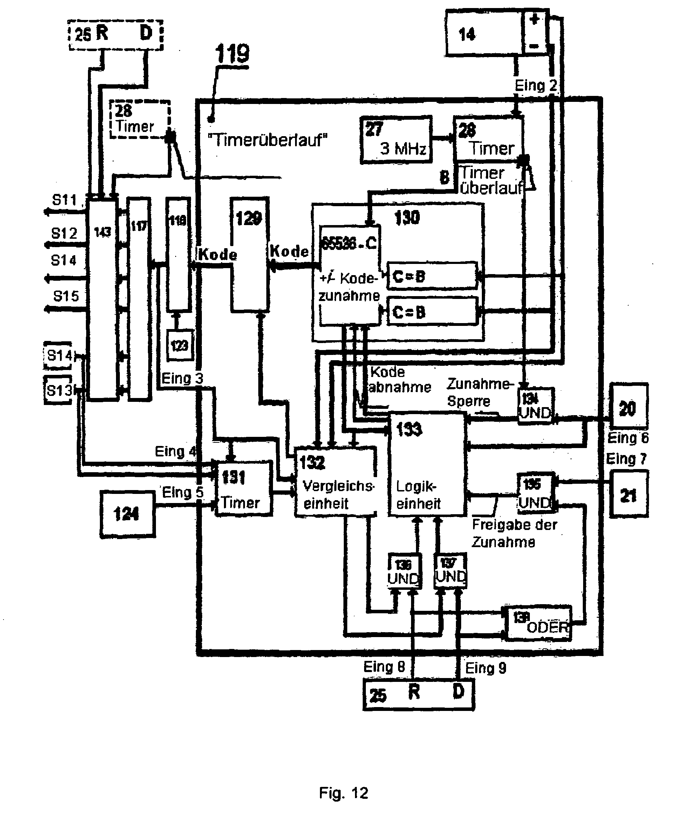

Der Rechner 119 des E-Motors (Fig. 12) weist ebenfalls einige Unterschiede gegenüber dem Rechner 19 des bürstenlosen stufenlosen regelbaren Getriebes auf. Seine funktionsidentischen Bauteile sind ebenfalls mit den um 100 größeren Bezugsziffern gekennzeichnet. Die Kenngröße "A" (Motorumdrehungen) ist hier überflüssig. Die Kenngröße "B" kommt vom Timer 28. Beim Überlauf des Timers 28 stellt die Einrichtung 143 die Speisung der Schalter 11 - Schalter 16 völlig ab.

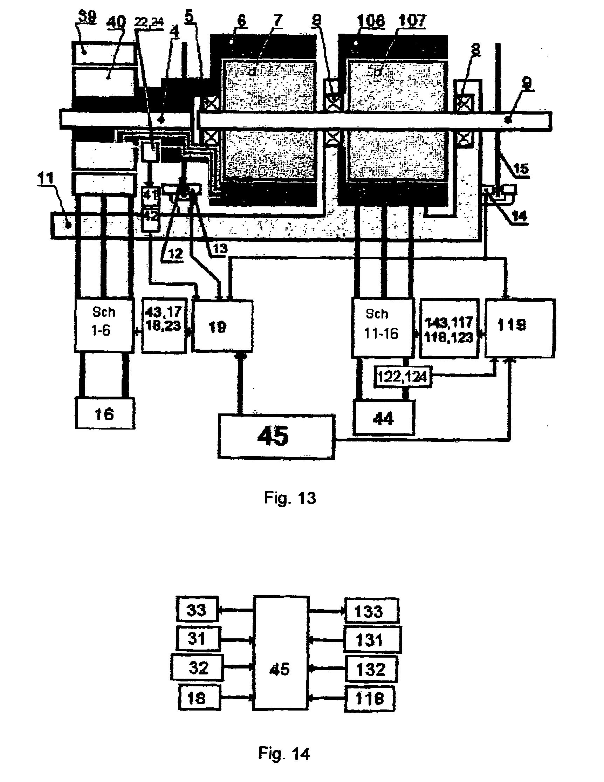

In Fig. 13 ist ein vereinfachtes Schema einer gemeinsamen Aufstellung von Getriebe und E-Motor dargestellt. Der Verbrennungsmotor ist nicht abgebildet. Darüber hinaus sind die Pedale 20 und 21 sowie der Gangschalthebel nicht abgebildet. Die Schalter 1 - 6 und Schalter 11-16 sind bedingt als verkleinerte Baugruppen abgebildet. Das gleiche gilt allerdings für die Bauteile 17, 18, 23, 43. 117, 118, 123, 143, 122, 124. Mit einer Bezugsziffer 45 ist eine Einrichtung gekennzeichnet, die die Belastung zwischen dem stufenlosen regelbaren Getriebe (Verbrennungsmotor) und dem E-Motor verteilt.

Die Differentialeinrichtung 45 (Fig. 13 und 15) dient zur Umverteilung der Belastung zwischen dem stufenlosen regelbaren Getriebe und dem E-Motor bei ihrer Zusammenarbeit. Die Fig. 13 zeigt, wie die Differentialeinrichtung mit den Rechnerbausteinen 19 und 119 zusammenwirkt, welche die Funktion des Getriebes und des E-Motors steuern.

Anhand der von den Timern 31 und 131 kommenden Daten werden die Drehmomente auf dem stufenlosen regelbaren Getriebe und dem E-Motor verglichen. Die Vergleichseinheiten 32 und 132 zeigen an, ob die Drehmomente übereinstimmen. Die Frequenzteiler 18 und 118 sind angeschlossen, um die Impulse zu zählen, die die PBM-Steuereinheiten steuern. Die Einrichtungen 33 und 133 empfangen dann die Differenzen, die sich aus den Kode-Änderungen ergeben.

Läuft die Motorwelle z. B. mit einer konstanten Drehzahl, und die Sekundärwelle 9 (Fig. 13) rotiert mit der Drehzahl 500 U/min, dann verträgt die Modulationsfrequenz für die PBM-Steuereinheiten 17 und 117 16,666 kHz. Der an die Frequenzteiler 18 und 118 gesendete Kode macht 65536 - 3000 aus.

Man nehme an, dass die Drehzahl der Sekundärwelle 9 sich von 500 auf 510 U/min innerhalb eines Zeitintervalls von 12 Sekunden ändert. Dafür muss die Modulationsfrequenz 16,999 kHz gesendet werden, und der Kode muss von 65536 - 3000 zur Größe 65536 - 2940 geändert werden. Die Kode-Änderungen werden alle 0,2 Sekunden erfolgen. Dabei wird die Zugkraft zwischen dem stufenlosen regelbaren Getriebe und dem E-Motor gleichmäßig verteilt sein, denn die Kode-Änderungen (sowie die Änderung der Übersetzungszahl auf dem stufenlosen regelbaren Getriebe) verlaufen simultan.

Lastumverteilung: Bei der Modulationsfrequenz von 16,666 kHz kommt die Kode-Änderung alle 0,2 Sekunden zustande. Innerhalb dieser Zeit empfangen die PBM-Steuereinheiten 17 und 117 3333 Impulse (mit einer Dauer von je 60 µs - das ist die Frequenz 16,666kHz) von den Frequenzteilem 18 und 118. Jeder der Impulse umfasst je 3000 0,02 µs lange Mikroimpulse - das ist die Frequenz von 50 MHz, die von den Treibergeneratoren 23 und 123 gesendet wird. Wenn nun der letzte von der PBM-Steuereinheit 17 gesendete Impuls unverändert gelassen wird, und wenn der Frequenzteiler 118 den Kode 65536 - 2999 (um Eins kleiner) empfängt, so wird in diesem Fall der Zählvorgang (um 0,2 µs) früher beendet. Die PBM-Steuereinheit 117 wird den entsprechenden Impuls etwas früher bekommen, und folglich wird auch der E-Motor 106, 107 (Fig. 13) eine etwas größere Belastung übernehmen.

Wird der Kode 65536 - 2999 an den Frequenzteiler 118 noch früher gesendet (zwei Impulse 120 µs), so übernimmt der E-Motor eine noch höhere Belastung. Die Differentialeinrichtung 45 vergleicht die Drehmomente (Timer 31 und 131, Fig. 14) und ermittelt, um wie viel früher die Kode-Änderung an den Frequenzteiler 118 gesendet werden muss (wenn der E-Motor eine höhere Belastung übernehmen muss).

Die Differentialeinrichtung zählt die von den Frequenzteilern (18 und 118, Fig. 14) kommenden Impulse ab und ermittelt daraus den Zeitpunkt, in dem der Kode für einen der Rechner geändert werden soll. Dabei wird der elektromagnetische Kraftschluss zwischen den Läufern und den Ständern im stufenlosen regelbaren Getriebe und im E-Motor die erforderliche weiche Lastverteilung so sicherstellen, als ob die Einrichtung mit Dämpfungsfedern ausgerüstet wäre.

Die Erhöhung der Zuverlässigkeit des Getriebes wird dadurch sichergestellt, dass anstelle der Lamellen die stromleitenden Ringe eingebaut sind. Diese Baugruppe ist betriebssicherer. Beim Einbau des zusätzlichen Generators kann auf die Bürsten überhaupt verzichtet werden. Das verringert seinerseits die Anzahl von Reibbauteilen. Diese Tatsache trägt einer Erhöhung der Zuverlässigkeit des Getriebes und einer Verlängerung seiner Lebensdauer bei.

Die Erweiterung des Regelbereichs der Übersetzungszahl der stufenlosen Kraftübertragung wird folgenderweise realisiert: Da die Bezugsgenerator-Frequenz Dutzende Megahertz erreicht, kann auch folglich die Dauer der die PBM-Steuereinheit steuernden Impulse um hundertstel von einer Mikrosekunde geändert werden. Somit kann die Anzahl der Festgänge des Getriebes einige Millionen erreichen. Das ermöglicht es, den sparsamsten oder einfach den optimalen Fahrzustand zu wählen und auch die stufenlose Änderung des Übersetzungsverhältnisses des stufenlosen regelbaren Getriebes sicherzustellen. Das wirkt sich positiv bei geringen Fahrgeschwindigkeiten und bei großen und schweren Vorrichtungen aus.

Das Umkehrgetriebe und der Leerlauf werden dadurch sichergestellt, dass das Übersetzungsverhältnis des Getriebes mittels Änderung der gegenseitigen Drehzahlen des Läufers 7 und des Ständers 6 geändert wird. Wird die größengleiche jedoch gegenläufige Drehzahl gegenüber der des Ständers 6 und der Motorwelle erreicht, so bleiben der Läufer 7 und die Sekundärwelle 9 unbeweglich. Dies kann als Leerlauf betrachtet werden. Bei einer weiteren Drehzahländerung des Läufers 7 in Bezug auf den Ständer 6 wechselt sich die Drehrichtung der Sekundärwelle 9. Das gilt als Umkehrgetriebe.

Der Leerlauf kann auch mittels einer einfachen Stromabschaltung der Steuerkreise des stufenlosen regelbaren Getriebes sichergestellt werden.

Die Sicherstellung des Umkehrgetriebes sowie des Leerlaufs ist auch beim Einsatz der bürstenlosen Konstruktion des stufenlosen regelbaren Getriebes möglich. Die

Getriebeumschaltung in den Umkehrgang erfolgt mittels einer Umschaltung der Steuerkreise durch die Leistungsschalter des stufenlosen regelbaren Getriebes.

Der Leerlauf wird auch erreicht, wenn der Gleichstrom an die Leistungsschalter des stufenlosen regelbaren Getriebes angelegt wird oder wenn die Steuerkreise stromlos geschaltet werden.

Die Verlängerung der Standzeit des Getriebes wird dadurch sichergestellt, dass das Drehmoment durch eine Zusammenwirkung der elektromagnetischen Kräfte des Läufers 7 und des Ständers 6 übertragen wird. Somit ist ein Verschleiß der Arbeitsfläche völlig ausgeschlossen.

Der Ersatz der Sammlerlamellen durch stromleitende Ringe erhöht wesentlich die Standzeit der Baugruppe. In Kombination mit der bürstenlosen Konstruktion des Getriebes kann auf die Reib- und Verschleißflächen bis auf die Lager (5 und 8; Fig. 1) überhaupt verzichtet werden.

Die Drehmomentmessung erfolgt anhand der Belastungsstromgröße in den Wicklungen. Deswegen ist die Wahrscheinlichkeit einer Überhitzung bzw. Durchbrennung der Wicklungen viel geringer. Dies verlängert ebenfalls die Standzeit der ganzen Einrichtung.

Die Verbesserung der Steuerbarkeit des stufenlosen regelbaren Getriebes wird dadurch erreicht, dass die Änderung der gegenseitigen Drehzahlen des Läufers 7 und des Ständers 6 mit Hilfe einer PBM-Modulation erfolgt. Die Impulse der PBM-Modulation werden ihrerseits mit hoher Genauigkeit mittels des Rechners 19 simuliert. Dabei werden die Drehzahlen der Getriebeteile ständig geändert und sind dem Steuerrechner immer bekannt. Das Übersetzungsverhältnis des Getriebes kann immer anhand dieser bekannten Daten berechnet werden.

Die Belastung kann zwei und mehr mechanische Energiequellen enthalten, z. B. einen Motor in Kombination mit einem E-Motor. Dadurch wird die PBM-Modulation es ermöglichen, die Belastung dazwischen nahtlos umzuverteilen. Das heißt, die Steuerbarkeit des stufenlosen regelbaren Getriebes wird wesentlich verbessert. Der Rechner 19 wird verschiedene Vorgänge genauer und sinnvoller steuern, als es bei der Steuerung der Gleichstrom-Sammlermaschine der Fall ist.

Es gibt keine Einschränkungen in Bezug auf die Steigerung der übertragenen Leistung. Das wird dadurch erreicht, dass die vom Motor auf den Antrieb übertragene Leistung über die gesamte Arbeitsfläche der Magnetkupplung (des stufenlosen regelbaren Getriebes) verteilt wird, im Unterschied zu stufenlosen regelbaren Riemengetrieben, wo die Last an den Kontaktflächen zwischen Riemen und Scheiben konzentriert ist. Diese Konstruktion ermöglicht es, ein stufenlos regelbares Getriebe mit beliebig großer Leistung herzustellen. Dafür müssen nur die Maße dementsprechend angepasst werden.

Das stufenlose regelbare Getriebe ist sehr einfach, weil es nur aus wenigen Bauteilen besteht. Die Konstruktion des Getriebes umfasst eine minimale Anzahl von Präzisionsteilen und von Bauteilen, die eine hochtechnologische und eine aufwendige Bearbeitung (Zementieren, Abschrecken, Schleifen) voraussetzen. Die Konstruktion des Getriebes weist keine speziellen mechanischen Vorrichtungen für die Umkehrgangumschaltung auf. Die Umschaltung erfolgt auch durch die Änderung der Steuerkenngrößen der Pulsbreitenmodulation in den logischen Kreisen der Mikroschaltung und an den Leistungsschaltern des Steuerkreises. Die Konstruktion enthält keine Einrichtung zur Leistungsflussunterbrechung (wie z. B. der Kupplungsautomat oder der Strömungswandler). Die elektromagnetische Kupplung überträgt den Leistungsfluss an die Leistungsschalter der Steuerung erst nach der Einspeisung. Außerdem ist nach der Stromzuführung an die Leistungsschalter der Steuerung eine solche Betriebsart möglich, bei dem der Läufer 7 und der Ständer 6 synchronisiert sind, jedoch wird das Drehmoment des stufenlosen regelbaren Getriebes nicht übertragen: Diese Betriebsart wird als Leerlauf bezeichnet. Das stufenlose regelbare Getriebe braucht für seinen Betrieb keine Sonderöle. Die Konstruktion des Getriebes ist maximal vereinfacht. Es gibt keine Hebel, Winkelhebel, gegenseitig bewegliche Bauteile usw. Das trägt auch zur Erhöhung der Zuverlässigkeit und der langen Lebensdauer des stufenlosen regelbaren Getriebes bei.

Die Schnellwirkung des Getriebes wird dadurch sichergestellt, dass die Bildung der Impulse der PBM-Modulation im Rechner zustande kommt. Die Leistungsschalter stehen dem Rechner in Bezug auf ihre Schnellwirkung nur ein wenig nach. Die Ständer- und Läuferkerne weisen eine Trägheit nur bei einer Umpolarisierung (Hystereseschleife) auf, jedoch überschreiten sie von der Schnelligkeit her auf jeden Fall die mechanischen und Kraftölsysteme. Da das Drehmoment infolge der Zusammenwirkung der elektromagnetischen Felder übertragen wird, kann die elektromagnetische Schaltkupplung bei beliebigen dynamischen Umschaltungen nicht beschädigt werden.

## Patentansprüche

1. Stufenloses hybrides Maschinenregelgetriebe mit Digitalsteuerung, welches einen Gangschalthebel (23) und eine Kupplungswelle (4) enthält, die mit einer Motorwelle verbunden ist, wobei die Motorwelle und ein Generator (16) auf einem Rahmen (11) befestigt sind und wobei der Generator (16) durch den Motor über einen Riementrieb (10) antreibbar ist, wobei:
- ein Ständer (6) auf der Kupplungswelle (4) befestigt und elektrisch mit einer Stromübertragungsvorrichtung (23) verbunden ist,
- ein Läufer (7) auf einer Sekundärwelle (9) befestigt ist und auf einem Lager (8) rotiert,
- auf dem Rahmen (11) eine Baugruppe befestigt ist, die aus einem Optokoppler-Geber (13) mit einem Empfänger besteht,
- zwischen beiden eine geschlitzte Scheibe (12) rotiert, wobei die Baugruppe zur Messung der Motordrehzahl dient,
- auf dem Rahmen (11) eine ähnliche Baugruppe befestigt ist, die zur Drehzahlmessung der Sekundärwelle (9) dient,
- das stufenlose regelbare Getriebe eine Steuereinheit (17) für Pulsbreitenmodulation (PBM) aufweist, die für die Steuerung von Leistungsschalter zuständig ist und
- die Leistungsschalter die Wicklungen des Läufers (7) steuern,
**dadurch gekennzeichnet, dass**:
- das stufenlose regelbare Getriebe auch einen steuerbaren Frequenzteiler (18) und einen Rechner (19) aufweist,
- die Funktion des Rechners (19) die Übertragung eines Kodes ist, mit dessen Hilfe ein Frequenzteilungsverhältnis festlegbar und in den Frequenzteiler (18) sendbar ist,
- das stufenlose regelbare Getriebe auch Geber (13, 14) aufweist, die bei Betätigung eines Fußbremshebels (20) und eines Beschleunigungspedals (21) auslösbar sind,
- das stufenlose regelbare Getriebe auch einen Nebenschluss (22) enthält, der zum Abgreifen eines Zusatzwiderstandes für eine Spannungsmessung vorgesehen ist und
- das stufenlose regelbare Getriebe auch einen spannungsgesteuerten Generator (24) enthält, dessen Funktion die Messung des Belastungsstroms im Stromkreis des stufenlosen regelbaren Getriebes ist,
wobei das stufenlose regelbare Getriebe außerdem:
- einen Timer (26) zur Bestimmung einer der Motordrehzahl indirekt proportionalen Größe A,
- einen Timer (28) zur Bestimmung einer der Drehzahl der Sekundärwelle indirekt proportionalen Größe B und
- eine mit den Timern (26, 28) verbundene Recheneinheit (30), welche eine von den Größen A und B abhängige Größe C bestimmt, mit der die Synchronisation zwischen Ständer (6) und Läufer (7) erfolgt,
aufweist.

2. Stufenlose hybrides Maschinenregelgetriebe mit Digitalsteuerung nach Anspruch 1,
**dadurch gekennzeichnet,**
**dass** es Elemente für die Stromübertragungsvorrichtung (2, 3) aufweist.

3. Stufenloses hybrides Maschinenregelgetriebe mit Digitalsteuerung nach Anspruch 1,
**dadurch gekennzeichnet,**
**dass** es einen zusätzlichen Generator (39) enthält, dessen Läufer unbeweglich auf dem Rahmen (11) befestigt und mit Drehstrom gespeist ist,
**dass** der Ständer (40) des zusätzlichen Generators (39) den Ständer (6) des stufenlosen regelbaren Getriebes versorgt,
**dass** das Getriebe auch einen Sender (41) zur Übertragung von Daten über die Drehmomentgröße enthält,
**dass** auf dem Rahmen (11) ein Empfänger (42) befestigt ist, der zur Datenübertragung an den Eingang des Rechners (19) vorgesehen ist und
**dass** das Getriebe auch einen Umschalter (43) enthält, welcher mit dem Getriebeschalthebel (25) steuerbar ist, dessen Funktion die Permutation von zwei den zusätzlichen Generator (39) versorgenden Phasen sowie die Sperrung der Impulsabgabe an die Leistungsschalter ist.

## Claims

1. A continuously variable hybrid engine regulating transmission with digital control, which includes a gearshift lever (23) and a clutch shaft (4) that is connected to a motor shaft, the motor shaft and a generator (16) being secured to a frame (11), and the generator (16) being drivable by the engine via a belt drive (10), in which:
- a stator (6) is secured to the clutch shaft (4) and is connected electrically to a current transmitting device (23),
- a rotor (7) is secured to a secondary shaft (9) and rotates on a bearing (8),
- a structural unit which comprises an optocoupler transducer (13) with a receiver is secured to the frame (11),
- a slotted disk (12) rotates between the two, and the structural unit serves to measure the engine rpm,
- a similar structural unit, which serves to measure the rpm of the secondary shaft (9), is secured to the frame (11),
- the continuously variable transmission has a control unit (17) for pulse width modulation (PWM), which is responsible for controlling power switches, and
- the power switches control the windings of the rotor (7),
**characterized in that**
- the continuously variable transmission also has a controllable frequency divider (18) and a computer (19);
- the function of the computer (19) is to transmit a code with the aid of which a frequency division ratio can be defined and sent to the frequency divider (18);
- the continuously variable transmission also has transducers (13, 14), which can be tripped upon actuation of a foot brake pedal (20) and an acceleration pedal (21);
- the continuously variable transmission also has a shunt (22), which is provided for picking up an additional resistance for a voltage measurement; and
- the continuously variable transmission also includes a voltage-controlled generator (24), the function of which is measuring the load current in the current circuit of the continuously variable transmission;
and in which the continuously variable transmission furthermore has
- a timer (26) for determining a variable A that is indirectly proportional to the engine rpm;
- a timer (28) for determining a variable B that is indirectly proportional to the rpm of the secondary shaft; and
- an arithmetic unit (30), connected to the timers (26, 28), that determines a variable C which is dependent on the variables A and B and with which the synchronization between the stator (6) and the rotor (7) is effected.

2. The continuously variable hybrid engine regulating transmission with digital control as defined by claim 1,
**characterized in that**
it has elements for the current transmitting device (2, 3).

3. The continuously variable hybrid engine regulating transmission with digital control as defined by claim 1,
**characterized in that**
it includes an additional generator (39), whose rotor is secured immovably on the frame (11) and is supplied with rotary current;
that the stator (40) of the additional generator (39) supplies the stator (6) of the continuously variable transmission;
that the transmission also includes a transmitter (41) for transmitting data about the magnitude of the torque;
that a receiver (42), which is provided for transmitting data to the input of the computer (19), is secured to the frame (11); and
that the transmission also includes a reversing switch (43), which is controllable with the gearshift lever (25) and whose function is the permutation of two phases that supply the additional generator (39) and the blocking of the output of pulses to the power switches.

## Revendications

1. Variateur hybride à variation continue à commande numérique pour machines électriques, lequel contient un levier de changement de vitesse (23) et un arbre d'embrayage (4) qui est relié à un arbre de moteur, l'arbre de moteur et un alternateur (16) étant fixés sur un châssis (11) et l'alternateur (16) pouvant être entraîné par le moteur au moyen d'une courroie d'entraînement (10), dans lequel :
- un stator (6) est fixé sur l'arbre d'embrayage (4) et relié électriquement à un dispositif de transmission de courant (23),
- un rotor (7) est fixé sur un arbre secondaire (9) et tourne sur un palier (8),
- sur le châssis (11) est fixé un ensemble composé d'un capteur à optocoupleur (13) et d'un récepteur,
- entre lesquels tourne un disque à fentes (12), l'ensemble servant à mesurer la vitesse de rotation du moteur,
- sur le châssis (11) est fixé un ensemble analogue qui sert à mesurer la vitesse de rotation de l'arbre secondaire (9),
- le variateur à variation continue présente une unité de commande (17) pour modulation de largeur d'impulsion (MLI) qui est responsable de la commande de commutateurs de puissance et
- les commutateurs de puissance commandent les enroulements du rotor (7),
**caractérisé en ce que** :
- le variateur à variation continue présente aussi un diviseur de fréquence commandable (18) et un calculateur (19),
- la fonction du calculateur (19) est la transmission d'un code à l'aide duquel un rapport de division de fréquence peut être défini et envoyé au diviseur de fréquence (18),
- le variateur à variation continue présente aussi des capteurs (13, 14) qui sont déclenchables en cas d'actionnement d'un levier de frein à pied (20) et d'une pédale d'accélération (21),
- le variateur à variation continue contient aussi un circuit dérivé (22) qui est prévu pour le prélèvement d'une résistance supplémentaire pour une mesure de tension et
- le variateur à variation continue contient aussi un alternateur commandé en tension (24) dont la fonction est la mesure du courant de charge dans le circuit du variateur à variation continue,
le variateur à variation continue présentant en outre :
- un temporisateur (26) pour déterminer une grandeur A indirectement proportionnelle à la vitesse de rotation du moteur,
- un temporisateur (28) pour déterminer une grandeur B indirectement proportionnelle à la vitesse de rotation de l'arbre secondaire et
- une unité de calcul (30) reliée aux temporisateurs (26, 28) qui détermine une grandeur C dépendante des grandeurs A et B, avec laquelle est réalisée la synchronisation entre stator (6) et rotor (7).

2. Variateur hybride à variation continue à commande numérique pour machines électriques selon la revendication 1,
**caractérisé en ce**
**qu'**il présente des éléments pour le dispositif de transmission de courant (2, 3).

3. Variateur hybride à variation continue à commande numérique pour machines électriques selon la revendication 1,
**caractérisé en ce**
**qu'**il contient un alternateur supplémentaire (39) dont le rotor est fixé de manière rigide sur le châssis (11) et qui est alimenté en courant triphasé, que le stator (40) de l'alternateur supplémentaire (39) alimente le stator (6) du variateur à variation continue,
**que** le variateur contient aussi un émetteur (41) pour la transmission de données sur le montant du couple,
**que** sur le châssis (11) est fixé un récepteur (42) qui est prévu pour la transmission de données à l'entrée du calculateur (19) et
**que** le variateur contient aussi un inverseur (43) qui peut être commandé par le levier de changement de vitesse (25), dont la fonction est de permuter deux phases alimentant l'alternateur supplémentaire (39) ainsi que de bloquer la transmission d'impulsions aux commutateurs de puissance.
